# EUROPEAN PATENT APPLICATION

(11) **EP 4 379 623 A1**
(43) Date of publication of application: **05.06.2024**
(21) Application number: 22936174.6
(22) Date of filing: 08.04.2022
(51) Int. Cl.: G06Q 10/04

(54) **AGV SYSTEM AND AGV SCHEDULING METHOD**

(71) Applicant: Contemporary Amperex Technology Co., Limited, Ningde, Fujian 352100 (CN)
(72) Inventor: LIN, Liyong, Ningde, Fujian 352100 (CN); SHI, Deqiang, Ningde, Fujian 352100 (CN); CHEN, Shurui, Ningde, Fujian 352100 (CN)
(74) Representative: Gong, Jinping
(86) International application number: PCT/CN2022/085811
(87) International publication number: WO 2023/193236

(57) **Abstract**

The present application relates to an AGV system and an AGV scheduling method, which can optimize the scheduling of AGVs in the AGV system to prevent a generation of peaks and troughs required for AGV transportation and/or peaks and troughs required for AGV charging, thereby improving the AGV utilization rate and the production line yield. The AGV scheduling method can include: acquiring an optimal value of a threshold of an AGV scheduling-related parameter, including: through a pre-established simulation model for a real AGV system, conducting a simulation on different values of the threshold of the AGV scheduling-related parameter to determine an obtained value of a related performance index at the corresponding value of the threshold; and taking the value of the threshold of the AGV scheduling-related parameter corresponding to the obtained value of the related performance index meeting the preset condition as the optimal value of the threshold of the AGV scheduling-related parameter; and using the optimal value of the threshold of the AGV scheduling-related parameter to conduct AGV scheduling in the real AGV system.

## Description

### TECHNICAL FIELD

The present application relates to the field of Automated Guided Vehicles (AGV), and particularly relates to an AGV scheduling method and an AGV system.

### BACKGROUND

At present, intelligent logistics is playing a more and more important role in social activities, especially in unmanned and intelligent plants. As an important part of a logistics system, the AGV system can replace manual handling and accurate and flexible delivery.

However, an existing AGV system and a related AGV scheduling method still have lots of aspects that need to be improved. For example, the existing AGV system only has a trigger threshold simply set to trigger the generation of various AGV tasks (for example AGV transport tasks, AGV charging tasks, etc.). The simple threshold setting has an adverse effect on the efficiency of the AGV system and enables the AGV utilization rate, the production line yield, etc. not to be effectively optimized and improved.

The present application is just an improvement made to the existing AGV system.

### SUMMARY

Because of the problems in an existing AGV system, the present application provides an AGV system and an AGV scheduling method, which can optimize the scheduling of AGVs in the AGV system to prevent a generation of peaks and troughs required for AGV transportation and/or peaks and troughs required for AGV charging, thereby improving the AGV utilization rate and the production line yield.

According to a first aspect of the present application, an AGV scheduling method is provided, comprising: acquiring an optimal value of a threshold of an AGV scheduling-related parameter, comprising: through a pre-established simulation model for a real AGV system, conducting a simulation on different values of the threshold of the AGV scheduling-related parameter to determine an obtained value of a related performance index at the corresponding value of the threshold; and taking a value of the threshold of the AGV scheduling-related parameter corresponding to the obtained value of the related performance index meeting the preset condition as the optimal value of the threshold of the AGV scheduling-related parameter; and using the optimal value of the threshold of the AGV scheduling-related parameter to conduct AGV scheduling in the real AGV system.

Through the AGV scheduling method, the value of the threshold of the scheduling parameter corresponding to the optimal value of different performance indexes considered by the AGV system can be simulated (for example, at the planning stage) so that the optimal performance index of the AGV system can be achieved.

According to an embodiment, the threshold of the AGV scheduling-related parameter comprises one or both of a first threshold corresponding to the remaining material handling time of production equipment and a second threshold corresponding to a remaining electric quantity of AGVs, and wherein the related performance index comprises one or both of an AGV utilization rate and a production line yield. The embodiment is a preferred example of the threshold of the AGV scheduling-related parameter and the related performance index. The AGV utilization rate and the production line yield are optimized objects. For optimization of the first threshold corresponding to the remaining material handling time of the production equipment, the generation and scheduling of an AGV transport task can be cooperated and optimized globally to prevent the generation of peaks and troughs required for AGV transportation. For optimization of the second threshold corresponding to the remaining electric quantity of the AGVs, the generation of an AGV charging task can be optimized to stagger AGV charging periods, thereby preventing the generation of peaks and troughs required for AGV charging and reducing AGV charging congestion and charging waiting time.

According to another embodiment, in the case that the remaining material handling time of the production equipment is lower than the first threshold, the AGV transport task is generated to schedule the AGVs to supply material to the production equipment, and in the case that the remaining electric quantity of the AGVs is lower than the second threshold, the AGV charging task is generated to schedule the AGVs to charging piles for charging. Through the first threshold and the second threshold, the AGV transport task and the AGV charging task can be generated automatically and intelligently in the AGV system to better prevent the generation of the peaks and troughs required for AGV transportation and the peaks and troughs required for AGV charging.

According to yet another embodiment, a simulation is conducted according to at least one of the following factors to determine the obtained value of the related performance index: the number of work orders, the number of the AGVs, the number of production equipment, the material handling rate of the production equipment, the transport capacity of the AGV, the movement speed of the AGVs, the initial electric quantity of the AGVs, the ratio of the number of the AGVs to the number of AGV charging piles, and the charging rate of the AGVs. The factors affecting the value of the threshold are provided according to the limitation to the parameter used during the process of finding the optimal value of the threshold so that the obtained value of the threshold can better reflect a condition of the real AGV system, and the optimal performance index (such as AGV utilization rate and/or production line yield) required by the real system can be achieved.

According to yet another embodiment, the greater the number of the work orders is, the smaller the number of the AGVs is, the lower the production rate of the production equipment is, the higher the transport capacity of the AGVs is, the higher the movement speed of the AGVs is, the smaller the optimal value of the first threshold is. In the embodiment, by selecting optimal parameters influencing the first threshold and further providing the specific impact of the optimal parameters on the first threshold, the optimal value of the threshold can be obtained more quickly. The obtained optimal value can better reflect the condition of the real AGV system, and the optimal performance index (such as AGV utilization rate and/or production line yield) required by the real system can be achieved.

According to yet another embodiment, the greater the number of the work orders is, the higher the ratio of the number of the AGVs to the number of the AGV charging piles is, the higher the charging rate of the AGVs is, the higher the movement speed of the AGVs is, the smaller the optimal value of the second threshold is. In the embodiment, by selecting optimal parameters influencing the second threshold and further providing the specific impact of the optimal parameters on the second threshold, the optimal value of the threshold can be obtained more quickly. The obtained optimal value can better reflect the condition of the real AGV system, and the optimal performance index (such as the AGV utilization rate and/or the production line yield) required by the real system can be achieved.

According to yet another embodiment, the simulation is conducted on a value in a first range corresponding to the first threshold and/or a value in a second range corresponding to the second threshold to determine the corresponding production line yield. In the embodiment, by limiting the value range of the threshold in the simulation process, the threshold can be simulated within a desired range, thereby shortening the simulation time, and finding the desired value of the threshold more efficiently.

According to yet another embodiment, the lower limit of the first range is calculated based on the transport capacity of the AGVs and the material handling rate of the production equipment, and the upper limit of the first range is calculated based on the transport capacity of the AGVs, the material handling rate of the production equipment and a material storage capacity of the production equipment. In the embodiment, by further limiting the value range of the first threshold, the value range of the threshold to be simulated can be narrowed down to a greater extent, thereby shortening the simulation time to a greater extent and finding the desired value of the threshold more efficiently.

According to yet another embodiment, the lower limit of the second range is calculated based on the current positions of the AGVs, the movement speed of the AGVs and the positions of the charging piles. In the embodiment, by further limiting the value range of the second threshold, the value range of the threshold to be simulated can be narrowed down to a greater extent, thereby shortening the simulation time to a greater extent, and finding the desired value of the threshold more efficiently.

According to yet another embodiment, the obtained value of the related performance index meeting the preset condition is a maximum value of the AGV utilization rate and/or a maximum value of the production line yield. In the embodiment, a preferred example of the performance index is provided, i.e., the maximum value of the AGV utilization rate and the maximum value of the production line yield. So, the AGV system and the production equipment can be made the best of to reduce production costs and improve effectiveness.

According to yet another embodiment, for at least one part of the production equipment, the determined first thresholds corresponding to the maximum AGV utilization rate and/or the maximum production line yield are different; and/or for at least one part of the AGVs, the determined second thresholds corresponding to the maximum AGV utilization rate and/or the maximum production line yield are different. In the embodiment, by setting different values of the threshold for each of the AGVs and/or the production equipment, the difference in initial conditions (such as electric quantities, time worked, wear, etc.) of each of the AGVs and/or the production equipment are fully considered so that the finally obtained value of the threshold for each of the AGVs and/or the production equipment can sufficiently reflect the condition in the real system, thereby achieving the optimal production line yield and/or the optimal AGV utilization rate for the real system.

According to yet another embodiment, the simulation is performed through Plant Simulation or Flexsim software. In the embodiment, the method of the present application can be implemented more conveniently and quickly by using ordinary simulation software.

According to a second aspect of the present application, an AGV system is provided, comprising: AGVs; an AGV simulation system configured to acquire an optimal value of a threshold of an AGV scheduling-related parameter, comprising: through a pre-established simulation model for a real AGV system, conducting a simulation on different values of the threshold of the AGV scheduling-related parameter to determine an obtained value of a related performance index at the corresponding value of the threshold; and taking a value of the threshold of the AGV scheduling-related parameter corresponding to the obtained value of the related performance index meeting the preset condition as the optimal value of the threshold of the AGV scheduling-related parameter; and an AGV scheduling controller configured to use the optimal value of the threshold of the AGV scheduling-related parameter to schedule the AGVs.

Through the AGV system, the value of the threshold of the scheduling parameter corresponding to the optimal value of different performance indexes considered by the AGV system can be simulated (for example, at the planning stage) so that the obtained value of the threshold of the scheduling parameter can be used in the real AGV system, thereby achieving the optimal performance index of the AGV system.

According to an embodiment, the threshold of the AGV scheduling-related parameter comprises one or both of the first threshold corresponding to the remaining material handling time of the production equipment and the second threshold corresponding to the remaining electric quantity of AGVs, and wherein the related performance index comprises one or both of the AGV utilization rate and the production line yield. The embodiment is the preferred example of the threshold of the AGV scheduling-related parameter and the related performance index. The AGV utilization rate and the production line yield are the optimized objects. For the optimization of the first threshold corresponding to the remaining material handling time of the production equipment, the generation and scheduling of the AGV transport task can be cooperated and optimized globally to prevent the generation of the peaks and troughs required for AGV transportation. For the optimization of the second threshold corresponding to the remaining electric quantity of the AGVs, the generation of the AGV charging task can be optimized to stagger the AGV charging periods, thereby preventing the generation of the peaks and troughs required for AGV charging and reducing the AGV charging congestion and the charging waiting time.

According to another embodiment, in the case that the remaining material handling time of the production equipment is lower than the first threshold, the AGV transport task is generated to schedule the AGVs to supply the material to the production equipment, and in the case that the remaining electric quantity of the AGVs is lower than the second threshold, the AGV charging task is generated to schedule the AGVs to the charging piles for charging. Through the first threshold and the second threshold, the AGV transport task and the AGV charging task can be generated automatically and intelligently in the AGV system to better prevent the generation of the peaks and troughs required for AGV transportation and the peaks and troughs required for AGV charging.

According to yet another embodiment, the obtained value of the related performance index meeting the preset condition is the maximum value of the AGV utilization rate and/or the maximum value of the production line yield. In the embodiment, a preferred example of the performance index is provided, i.e., the maximum value of the AGV utilization rate and the maximum value of the production line yield. So, the AGV system and the production equipment can be made the best of to reduce the production cost and improve the effectiveness.

According to yet another embodiment, the determined values of the first threshold corresponding to the maximum AGV utilization rate and/or the maximum production line yield are different for at least one part of the production equipment; and/or the determined values of the second threshold corresponding to the maximum AGV utilization rate and/or the maximum production line yield are different for at least one part of the AGVs. In the embodiment, by setting the different values of the threshold for each of the AGVs and/or the production equipment, the difference in the initial conditions (such as electric quantities, time worked, wear, etc.) of each of the AGVs and/or the production equipment are fully considered so that the final obtained value of the threshold for each of the AGVs and/or the production equipment can sufficiently reflect the condition of the real system so that the optimal production line yield and/or the optimal AGV utilization rate can be achieved for the real system.

The foregoing description is only an overview of the technical solutions of the present application, and the present application can be implemented according to the content of the description to make the technical means of the present application more clearly understood, and the following detailed description of the present application is given to make the above and other objects, features, and advantages of the present application more clearly understandable.

### BRIEF DESCRIPTION OF THE DRAWINGS

To more clearly illustrate the technical solutions of the embodiments of the present application, the accompanying drawings required by the embodiments of the present application are introduced briefly below, it is obvious that the accompanying drawings depicted below are merely some examples of the present application, for those skilled in the art, they can also obtain other accompanying drawings based on the accompanying drawings without paying creative work.
FIG. 1 is an exemplary flow diagram of an AGV scheduling method according to an embodiment of the present application.
FIG. 2 is an exemplary flow diagram of a method for acquiring an optimal value of a threshold according to an embodiment of the present application.
FIG. 3 is a schematic block diagram of an AGV system according to an embodiment of the present application.

The accompanying drawings are not drawn to scale.

### DETAILED DESCRIPTION OF EMBODIMENTS

The embodiments of the technical solutions of the present application will be described in detail in conjunction with the accompanying drawings below. The following embodiments are just used to illustrate the technical solutions of the present application more clearly, only serve as examples, but are not intended to limit the protection scope of the present application.

Unless otherwise defined, all the technical and scientific terms used herein have the same meanings as are commonly understood by those skilled in the art of the present application. The terms used herein in the description of the present application are to describe the specific embodiments only and are not intended to limit the present application. The terms "including" and "having" and any variations thereof in the description and claims as well as the drawings of the present application are intended to cover a non-exclusive inclusion.

In the description of the embodiments of the present application, the technical terms "first", "second", etc. are used to distinguish different objects and are not to be construed as indicating or implying relative importance or implicitly explaining the number, a particular order or a primary-secondary relationship of the indicated technical features. In the description of the embodiments of the present application, "a plurality of" means two or more, unless otherwise specifically limited.

The "embodiment" mentioned in the present application means that special features, structures, or characteristics are described in conjunction with the embodiments and may be included in at least one embodiment of the present application. The phrase appearing at each position of the description does not necessarily indicate the same embodiment and it is not an exclusively independent or alternative embodiment of other embodiments. It is explicitly and implicitly understood by those skilled in the art that the embodiments described herein may be combined with other embodiments.

The term "and/or" in the description of the embodiments of the present application is simply a description of the association relationship of the associated objects, indicating that three relationships can exist, for example, A and/or B, which can mean: A exists alone, both A and B exist, and B exists alone. In addition, the character "/" in the present application generally indicates an alternative relationship between the front and back associated objects.

The inventor realizes that as an important part of the logistics system, the AGV system can replace manual handling and accurate and flexible delivery. As a decision-making system of the AGVs, the scheduling controller included in the AGV system is responsible for the functions such as the assignment of AGV transport tasks, route planning and scheduling, and/or charging management. In the working process of the AGV system, a threshold associated with a plurality of AGV scheduling-related parameters needs to be used as a trigger condition to trigger the corresponding work task. For example, the AGV scheduling system will generate the AGV transport tasks according to the remaining material handling time of the production equipment, assign the generated AGV transport tasks to the different AGVs and conduct corresponding route planning and scheduling on the AGVs to transport the production material; when the electric quantity of the AGV is lower than some given thresholds, an AGV scheduling control system may generate the AGV charging task and assign the AGV to the corresponding charging pile for charging, and so on.

However, an existing AGV scheduling control system uses fixed thresholds specified artificially as the thresholds with neither considering the demands of actual production conditions nor conducting corresponding threshold optimization designs, thereby not optimizing and improving various related performance indexes (such as the AGV utilization rate and the production line yield, namely the productivity of the production equipment) of the AGV system. For example, the fixed thresholds specified artificially may cause the conditions such as equipment shutdown to wait for materials, thereby reducing the production line yield, or may cause charging congestion and charging waiting of the AGVs, thereby reducing the AGV utilization rate, and so on.

Based on the above consideration, to optimize the performance indexes required by the AGV system, the present application provides the AGV system and the AGV scheduling method, which can optimize the scheduling of the AGVs in the AGV system to obtain the required optimal performance index.

For ease of illustration, the following embodiments take the generation of a sealing nail weld defect sample of a traction battery as an example to illustrate this.

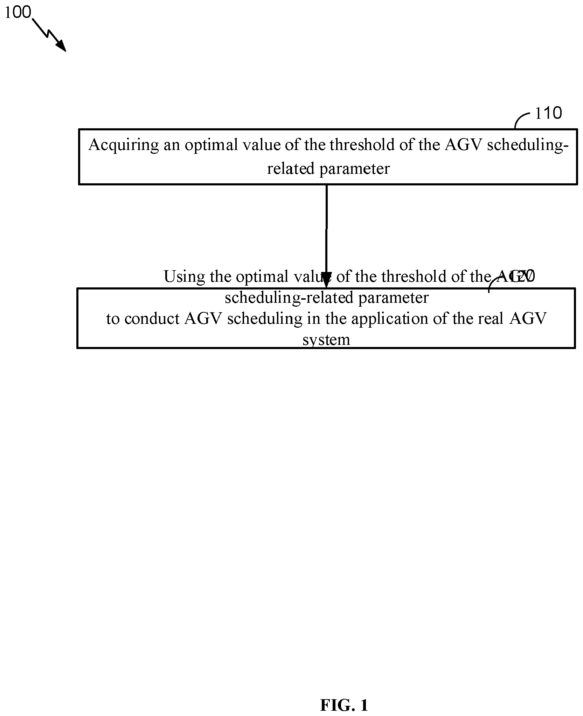

With reference to FIG. 1, FIG. 1 is an exemplary flow diagram of an AGV scheduling method 100 according to an embodiment of the present application. As shown in FIG. 1, the method 100 starts with Step 110: acquiring an optimal value of the threshold of the AGV scheduling-related parameter. In some embodiments, the optimal value of the threshold may make the related performance index of the AGV system optimized. According to an embodiment, the related performance index may comprise one or both of the AGV utilization rate and the production line yield. Thus, the optimal value of the threshold of the AGV scheduling-related parameter can make the AGV utilization rate and/or the production line yield optimized.

In another embodiment, the threshold of the AGV scheduling-related parameter can comprise one or both of a first threshold corresponding to the remaining material handling time of the production equipment and a second threshold corresponding to the remaining electric quantity of the AGVs. In the embodiment, the optimal value of the first threshold corresponding to the remaining material handling time of the production equipment can cooperate and optimize the generation and scheduling of the AGV transport task globally to prevent the generation of the peaks and troughs required for AGV transportation; and the optimal value of the second threshold corresponding to the remaining electric quantity of the AGVs can optimize the generation of the AGV charging task to stagger the AGV charging periods, thereby preventing the generation of the peaks and troughs required for AGV charging and reducing the AGV charging congestion and charging waiting time.

Further, according to the embodiment, in the case that the first threshold is used for generating and scheduling the AGV transport task, i.e., the remaining material handling time of the production equipment is lower than the first threshold, the AGV transport task is generated to schedule the AGVs to supply the material to the production equipment; and in the case that the second threshold is used for generating and scheduling the AGV charging task, i.e. the remaining electric quantity of the AGVs is lower than the second threshold, the AGV charging task is generated to schedule the AGVs to the charging piles for charging. Those skilled in the art may understand that the thresholds are just examples of parameter thresholds used in the AGV system, there may be various other suitable parameter thresholds (such as the overstock quantity of products produced by the production equipment on a production line). They all may be optimized and used according to the method and the system of the present application, which is not described again here.

Through the first threshold and the second threshold, the AGV transport task and the AGV charging task can be generated automatically and intelligently in the AGV system to better prevent the generation of the peaks and troughs required for AGV transportation and the peaks and troughs required for AGV charging, thereby improving the AGV utilization rate and the production line yield.

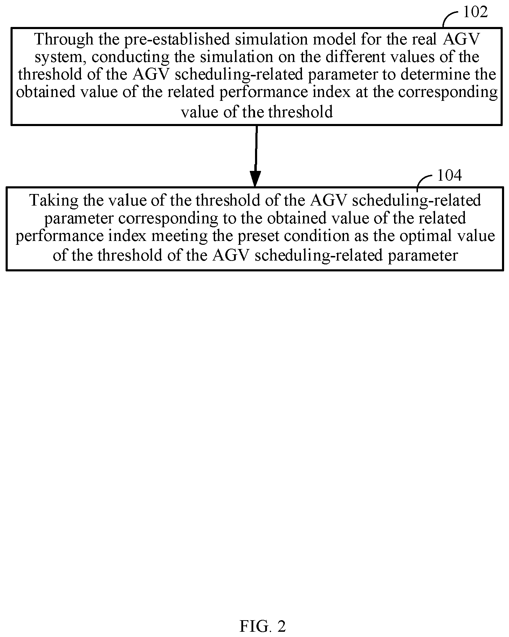

In an embodiment, the acquiring the optimal value of the threshold of the AGV scheduling-related parameter may be performed in any proper way. For example, FIG. 2 shows an example of an acquisition way.

With reference to FIG. 2, which shows an exemplary flow diagram of the method 200 for acquiring the optimal value of the threshold according to an embodiment of the present application. It may be seen that the method 200 starts with Step 102: through the pre-established simulation model for the real AGV system, conducting the simulation on the different values of the threshold of the AGV scheduling-related parameter to determine the obtained value of the related performance index at the corresponding value of the threshold.

In an embodiment, the simulation is performed through Plant Simulation or Flexsim software. In the embodiment, by using ordinary simulation software, the method of the present application can be performed more conveniently and quickly. For example, a simulation model (at least including an AGV task generation module, an AGV task assignment module, an AGV route planning and scheduling module, a charging management module and other modules) of the AGV system ( as well as any required upper/lower systems) is built by using simulation software Plant Simulation; the thresholds ( such as the threshold corresponding to the remaining material handling time of the production equipment and the threshold corresponding to the remaining electric quantity of the AGVs) to be optimized and the performance indexes (such as the AGV utilization rate and/or the production line yield) to be optimized are defined in the simulation model; and for the values of each group of the thresholds, make sure that the AGV task assignment module, the route planning and scheduling module and other modules remain unchanged, and the performance index is calculated through Plant Simulation. Subsequently, the optimal performance index can be calculated based on the calculated performance indexes, and a group of values of the threshold corresponding to the optimal performance index can be obtained.

In a preferred embodiment, the threshold of the AGV scheduling-related parameter can comprise one or both of the first threshold corresponding to the remaining material handling time of the production equipment and the second threshold corresponding to the remaining electric quantity of the AGVs. In the embodiment, the simulation is conducted according to at least one of the following factors to determine the obtained value of the related performance index: the number of work orders, the number of the AGVs, the number of the production equipment, the material handling rate of the production equipment, the transport capacity of the AGVs, the movement speed of the AGVs, the initial electric quantity of the AGVs, the ratio of the number of the AGVs to the number of AGV charging piles, the charging rate of the AGVs, and so on. It will be known that any other suitable factors affecting the first threshold and/or the second threshold or various other different thresholds of the AGV scheduling-related parameter, which is not repeated here again. In the embodiment, the factors affecting the value of the threshold are provided according to the limitation of the parameter used during the process of finding the optimal value of the threshold so that the obtained value of the threshold can better reflect the condition of the real AGV system, and the optimal performance index (such as AGV utilization rate and/or production line yield) required by the real system can be achieved.

Further, according to the embodiment, the greater the number of the work orders is, the smaller the number of the AGVs is, the lower the production rate of the production equipment is, the higher the transport capacity of the AGVs is, the higher the movement speed of the AGVs is, the smaller the optimal value of the first threshold is. In the embodiment, by selecting optimal parameters influencing the first threshold and further providing the specific impact of the optimal parameters on the first threshold, the optimal value of the threshold can be obtained more quickly. The obtained optimal value can better reflect the condition of the real AGV system, and the optimal performance index (such as the AGV utilization rate and/or the production line yield) required by the real system can be achieved.

Further, according to the embodiment, the greater the number of the work orders is, the higher the ratio of the number of the AGVs to the number of the AGV charging piles is, the higher the charging rate of the AGVs is, the higher the movement speed of the AGVs is, the smaller the optimal value of the second threshold is. In the embodiment, by selecting the optimal parameters affecting the second threshold and further providing the specific impact of the optimal parameters on the second threshold, the optimal value of the threshold can be obtained more quickly. The obtained optimal value can better reflect the condition of the real AGV system, and the optimal performance index (such as the AGV utilization rate and/or the production line yield) required by the real system can be achieved.

In the embodiment that the threshold of the AGV scheduling-related parameter can comprise one or both of the first threshold corresponding to the remaining material handling time of the production equipment and the second threshold corresponding to the remaining electric quantity of the AGVs, to shorten the simulation time, the value in the first range corresponding to the first threshold and/or the value in the second range corresponding to the second threshold are simulated to determine the corresponding production line yield. In the embodiment, by limiting the value range of the threshold in the simulation process, the threshold can be simulated within the desired range, thereby shortening the simulation time, and finding the desired value of the threshold more efficiently.

Further, according to the above embodiment, the lower limit of the first range is calculated based on the transport capacity of the AGVs and the material handling rate of the production equipment, and the upper limit of the first range is calculated based on the transport capacity of the AGVs, the material handling rate of the production equipment and the material storage capacity of the production equipment. In the embodiment, by further limiting the value range of the first threshold, the value range of the threshold to be simulated can be narrowed down to a greater extent, thereby shortening the simulation time to a greater extent and finding the desired value of the threshold more efficiently. Further, according to the embodiment, the lower limit of the second range is calculated based on the current positions of the AGVs, the movement speed of the AGVs and the positions of the charging piles. In the embodiment, by further limiting the value range of the second threshold, the value range of the threshold to be simulated can be narrowed down to a greater extent, thereby shortening the simulation time to a greater extent, and finding the desired value of the threshold more efficiently.

In an embodiment, the obtained value of the related performance index meeting the preset condition is the maximum value of the AGV utilization rate and/or the maximum value of the production line yield. In the embodiment, the preferred example of the performance index is provided, i.e., the maximum value of the AGV utilization rate and the maximum value of the production line yield. So, the AGV system and the production equipment can be made the best of to reduce the production cost and improve the effectiveness.

According to yet another embodiment, for at least one part of the production equipment, the determined first thresholds corresponding to the maximum AGV utilization rate and/or the maximum production line yield are different; and/or for at least one part of the AGVs, the determined second thresholds corresponding to the maximum AGV utilization rate and/or the maximum production line yield are different. In the embodiment, not each of the AGVs and/or the production equipment adopts the same value of the threshold, but the different values of the threshold are set for each of the AGVs and/or the production equipment, the difference in the initial conditions (such as the electric quantities, the time worked, the wear, etc.) of each of the AGVs and/or the production equipment are fully considered so that the finally obtained value of the threshold for each of the AGVs and/or the production equipment can sufficiently reflect the condition in the real system, thereby achieving the optimal production line yield and/or the optimal AGV utilization rate for the real system.

With reference to FIG. 2, in Step 104, the method 200 can comprise: taking the value of the threshold of the AGV scheduling-related parameter corresponding to the obtained value of the related performance index meeting the preset condition as the optimal value of the threshold of the AGV scheduling-related parameter.

It will be known that there may be various other proper ways to obtain the optimal value of the threshold of the AGV scheduling-related parameter, for example, by looking up pre-established tables (established based on the initial conditions of the real AGV system), by interpolation and extrapolation methods, etc., which is not repeated here again.

With reference to FIG. 1 again, in Step 120, the method 100 can comprise: using the optimal value of the threshold of the AGV scheduling-related parameter to conduct AGV scheduling in the real AGV system. Therefore, through the AGV scheduling method 100, the value of the threshold of the scheduling parameter corresponding to the optimal value of different performance indexes considered by the AGV system can be simulated (for example, at the planning stage) so that the obtained value of the threshold of the scheduling parameter can be used in the real AGV system, thereby achieving the optimal performance index of the AGV system.

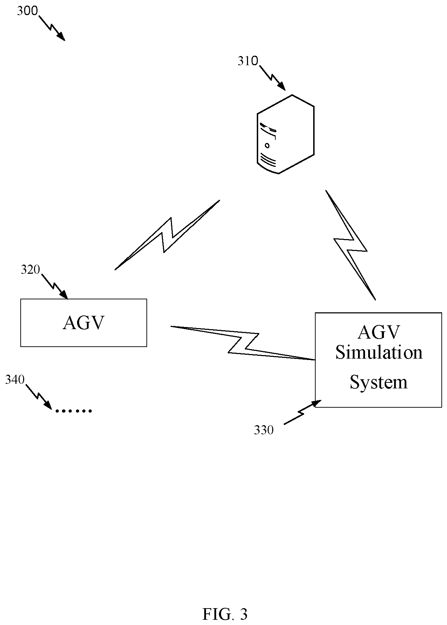

FIG. 3 is a schematic block diagram of an AGV system 300 according to an embodiment of the present application.

With reference to FIG. 3, it can be seen that the AGV system 300 can comprise an AGV scheduling controller 310, an AGV 320, and an AGV simulation system 330. It will be known that the AGV scheduling controller 310, the AGV 320, and the AGV simulation system 330 may communicate with each other, as shown in a lightening shape shown in FIG. 3. Without doubt, the communication can adopt any other proper forms, for example, the AGV 310 and the AGV simulation system 330 may image not directly, but via the AGV scheduling controller 310 as an intermediate, and so on.

Those skilled in the art can understand that for the sake of simplicity, only the AGV 310 is shown in FIG. 3, and the AGV system 300 can comprise any number of AGVs, as shown by an ellipsis 340 in FIG. 3. In addition, although the AGV scheduling controller 310 is shown in the form of a server in FIG. 3, those skilled in the art will understand that it is only an example, and the AGV scheduling controller 310 may adopt any proper forms, such as on-cloud.

In an embodiment, the AGV simulation system 330 can be configured to the acquire value of the threshold of the AGV scheduling-related parameter. Further, according to the embodiment, it may also include a pre-established simulation model for the real AGV system 300, which conducts the simulation on the different values of the threshold of the AGV scheduling-related parameter to determine the obtained value of the related performance index at the corresponding value of the threshold and take the value of the threshold of the AGV scheduling-related parameter corresponding to the obtained value of the related performance index meeting the preset condition as the optimal value of the threshold of the AGV scheduling-related parameter. The AGV scheduling controller 310 can be configured to receive the optimal value from the AGV simulation system 330 and use the optimal value to schedule the AGV 320. In this way, through the AGV system 300, the value of the threshold of the scheduling parameter corresponding to the optimal value of different performance indexes considered by the AGV system can be simulated (for example, at the planning stage) so that the obtained value of the threshold of the scheduling parameter can be used in the real AGV system, thereby achieving the optimal performance index of the AGV system.

According to another embodiment, the threshold of the AGV scheduling-related parameter can comprise one or both of the first threshold corresponding to the remaining material handling time of the production equipment and the second threshold corresponding to the remaining electric quantity of the AGVs, wherein the related performance index comprises one or both of the AGV utilization rate and the production line yield. The embodiment is the preferred example of the threshold of the AGV scheduling-related parameter and the related performance index. The AGV utilization rate and the production line yield are the optimized objects. For the optimization of the first threshold corresponding to the remaining material handling time of the production equipment, the generation and scheduling of the AGV transport task can be cooperated and optimized globally to prevent the generation of the peaks and troughs required for AGV transportation. For the optimization of the second threshold corresponding to the remaining electric quantity of the AGVs, the generation of the AGV charging task can be optimized to stagger the AGV charging periods, thereby preventing the generation of the peaks and troughs required for AGV charging and reducing the AGV charging congestion and the charging waiting time.

According to another embodiment, in the case that the remaining material handling time of the production equipment is lower than the first threshold, the AGV transport task is generated to schedule the AGVs to supply the material to the production equipment, and in the case that the remaining electric quantity of the AGVs is lower than the second threshold, the AGV charging task is generated to schedule the AGVs to the charging piles for charging. Through the first threshold and the second threshold, the AGV transport task and the AGV charging task can be generated automatically and intelligently in the AGV system to better prevent the generation of the peaks and troughs required for AGV transportation and the peaks and troughs required for AGV charging.

According to yet another embodiment, the obtained value of the related performance index meeting the preset condition is the maximum value of the AGV utilization rate and/or the maximum value of the production line yield. In the embodiment, the preferred example of the performance index is provided, i.e., the maximum value of the AGV utilization rate and the maximum value of the production line yield. So, the AGV system and the production equipment can be made the best of to reduce the production cost and improve the effectiveness.

According to yet another embodiment, for at least one part of the production equipment, the determined first thresholds corresponding to the maximum AGV utilization rate and/or the maximum production line yield are different; and/or for at least one part of the AGVs, the determined second thresholds corresponding to the maximum AGV utilization rate and/or the maximum production line yield are different. In the embodiment, not each of the AGVs and/or the production equipment adopts the same value of the threshold, but the different values of the threshold are set for each of the AGVs and/or the production equipment, the difference in the initial conditions (such as the electric quantities, the time worked, the wear, etc.) of each of the AGVs and/or the production equipment are fully considered so that the finally obtained value of the threshold for each of the AGVs and/or the production equipment can sufficiently reflect the condition in the real system, thereby achieving the optimal production line yield and/or the optimal AGV utilization rate for the real system.

Although the AGV scheduling controller 310 and the AGV Simulation System 330 are shown as separate components in FIG. 3, those skilled in the art will understand that they may be located in the same place or may be respectively split into a plurality of subsystems (just the subsystems can achieve the functions).

The technical solutions of the present application can optimize the threshold associated with the remaining material handling time of the production equipment. When the remaining material handling time of the production equipment is lower than the threshold, the related AGV scheduling controller of the AGV system can automatically assign the AGV transport tasks to one or more selected AGVs in the AGV system to transport the material.

The technical solutions of the present application can also optimize the threshold associated with the remaining electric quantity of the AGV When the remaining electric quantity of the AGV is lower than the threshold, the related AGV scheduling controller of the AGV system can automatically generate a charging task for the AGV and assign the AGV to the corresponding charging pile for charging.

According to the technical solutions of the present application, an optimization algorithm library can be simulated and called through the AGV system at the planning stage to optimize the threshold associated with the remaining material handling time of the production equipment and the threshold associated with the remaining electric quantity of the AGV to automatically and intelligently generate and schedule the AGV transport task and the AGV charging task, thereby cooperating and optimizing the AGV utilization rate globally and improving the production line yield.

It will be understood that the technical solutions of the present application can be performed in advance at the planning stage of the AGV system and/or in the working process of the real system.

Although the present application has been described with reference to preferred embodiments, various improvements can be made thereto and equivalents can be used for the replacement of members therein without departing from the scope of the present application. Most of all, on the premise of no structural conflict, the technical features mentioned in the embodiments can be combined in any way. The present application is not restricted to particular embodiments disclosed herein but comprises all the technical solutions falling in the scope of the claims.

## Claims

1. An automated guided vehicle (AGV) scheduling method, comprising:
acquiring an optimal value of a threshold of an AGV scheduling-related parameter, comprising:
through a pre-established simulation model for a real AGV system, conducting a simulation on different values of the threshold of the AGV scheduling-related parameter to determine an obtained value of a related performance index at the corresponding value of the threshold; and
taking the value of the threshold of the AGV scheduling-related parameter corresponding to an obtained value of the related performance index meeting a preset condition as the optimal value of the threshold of the AGV scheduling-related parameter; and
using the optimal value of the threshold of the AGV scheduling-related parameter to conduct AGV scheduling in the real AGV system.

2. The method according to claim 1, wherein the threshold of the AGV scheduling-related parameter comprises one or both of a first threshold corresponding to the remaining material handling time of production equipment and a second threshold corresponding to a remaining electric quantity of AGVs, and wherein the related performance index comprises one or both of an AGV utilization rate and a production line yield.

3. The method according to any one of claims 1 to 2, wherein in the case that the remaining material handling time of the production equipment is lower than the first threshold, an AGV transport task is generated to schedule the AGVs to supply material to the production equipment, and in the case that the remaining electric quantity of the AGVs is lower than the second threshold, an AGV charging task is generated to schedule the AGVs to charging piles for charging.

4. The method according to any one of claims 1 to 3, wherein the simulation is conducted according to at least one of the following factors to determine the obtained value of the related performance index: the number of work orders, the number of the AGVs, the number of the production equipment, the material handling rate of the production equipment, the transport capacity of the AGVs, the movement speed of the AGVs, the initial electric quantity of the AGVs, the ratio of the number of the AGVs to the number of AGV charging piles, and the charging rate of the AGVs.

5. The method according to any one of claims 1 to 4, wherein the greater the number of the work orders is, the smaller the number of the AGVs is, the lower the production rate of the production equipment is, the higher the transport capacity of the AGVs is, the higher the movement speed of the AGVs is, the smaller the optimal value of the first threshold is.

6. The method according to any one of claims 1 to 5, wherein the greater the number of the work orders is, the higher the ratio of the number of the AGVs to the number of the AGV charging piles is, the higher the charging rate of the AGVs is, the higher the movement speed of the AGVs is, the smaller the optimal value of the second threshold is.

7. The method according to any one of claims 1 to 6, wherein the simulation is conducted on a value in a first range corresponding to the first threshold and/or a value in a second range corresponding to the second threshold to determine the corresponding production line yield.

8. The method according to any one of claims 1 to 7, wherein the lower limit of the first range is calculated based on the transport capacity of the AGVs and the material handling rate of the production equipment, and the upper limit of the first range is calculated based on the transport capacity of the AGVs, the material handling rate of the production equipment and a material storage capacity of the production equipment.

9. The method according to any one of claims 1 to 8, wherein the lower limit of the second range is calculated based on the current positions of the AGVs, the movement speed of the AGVs and the positions of the charging piles.

10. The method according to claims 1 to 9, wherein
the obtained value of the related performance index meeting the preset condition is a maximum value of the AGV utilization rate and/or a maximum value of the production line yield.

11. The method according to any one of claims 1 to 10, wherein
the determined values of the first threshold corresponding to the maximum AGV utilization rate and/or the maximum production line yield are different for at least one part of the production equipment; and/or
the determined values of the second threshold corresponding to the maximum AGV utilization rate and/or the maximum production line yield are different for at least one part of the AGVs.

12. The method according to any one of claims 1 to 11, wherein the simulation is performed through Plant Simulation or Flexsim software.

13. An AGV system, comprising:
AGVs;
an AGV simulation system configured to acquire the optimal value of the threshold of the AGV scheduling-related parameter, comprising:
through a pre-established simulation model for a real AGV system, conducting a simulation on different values of the threshold of the AGV scheduling-related parameter to determine an obtained value of a related performance index at the corresponding value of the threshold; and
taking the value of the threshold of the AGV scheduling-related parameter corresponding to an obtained value of the related performance index meeting a preset condition as the optimal value of the threshold of the AGV scheduling-related parameter; and
an AGV scheduling controller configured to use the optimal value of the threshold of the AGV scheduling-related parameter to schedule the AGVs.

14. The system according to claim 13, wherein the threshold of the AGV scheduling-related parameter comprises one or both of the first threshold corresponding to the remaining material handling time of the production equipment and the second threshold corresponding to the remaining electric quantity of the AGVs, and wherein the related performance index comprises one or both of the AGV utilization rate and the production line yield.

15. The system according to claim 13 or claim 14, wherein in the case that the remaining material handling time of the production equipment is lower than the first threshold, the AGV transport task is generated to schedule the AGVs to supply the material to the production equipment, and in the case that the remaining electric quantity of the AGVs is lower than the second threshold, the AGV charging task is generated to schedule the AGVs to the charging piles for charging.

16. The system according to any one of claims 13 to 15, wherein
the obtained value of the related performance index meeting the preset condition is a maximum value of the AGV utilization rate and/or a maximum value of the production line yield.

17. The system according to any one of claims 13 to 16, wherein
the determined values of the first threshold corresponding to the maximum AGV utilization rate and/or the maximum production line yield are different for at least one part of the production equipment; and/or
the determined values of the second threshold corresponding to the maximum AGV utilization rate and/or the maximum production line yield are different for at least one part of the AGVs.
